# EUROPEAN PATENT APPLICATION

(11) **EP 3 300 384 A1**
(43) Date of publication of application: **28.03.2018**
(21) Application number: 16795714.1
(22) Date of filing: 09.03.2016
(51) Int. Cl.: H04Q 11/00

(54) **ONU TEMPLATE GENERATING METHOD AND DEVICE**

(30) Priority: 21.05.2015 CN 201510262733
(71) Applicant: ZTE Corporation, Shenzhen, Guangdong 518057 (CN)
(72) Inventor: ZHANG, Zhikun, Shenzhen Guangdong 518057 (CN); FU, Huaming, Shenzhen Guangdong 518057 (CN); JIANG, Jian, Shenzhen Guangdong 518057 (CN)
(74) Representative: Winter, Brandl, Fürniss, Hübner, Röss, Kaiser, Polte - Partnerschaft mbB
(86) International application number: PCT/CN2016/076002
(87) International publication number: WO 2016/184227

(57) **Abstract**

Provided are a method and apparatus for generating an ONU template. The method includes acquiring modification information about a service parameter of a first ONU template; creating a second ONU template that has a same service parameter as the first ONU template; and modifying a corresponding service parameter in the second ONU template according to the modification information to obtain a third ONU template. Cumbersomeness of a process of modifying the ONU service parameter is solved and complexity of modifying the ONU service parameter is reduced.

## Description

### TECHNICAL FIELD

The present invention relates to communications and, in particular, to a method and apparatus for generating an ONU template.

### BACKGROUND

The Gigabit-capable PON (GPON) technology has significant advantages in access rate, bandwidth efficiency, splitting ratio, full service carrying capacity, security, etc. and thus has become a preferred technology in the era of optical access. The GPON technology is proposed and standardized by the International Telecommunication Union Telecommunication Standardization Sector (ITU-T), and has formed G.98x.x-series Recommendations. ITU-T Recommendation G.988 proposes requirements for an ONU management and control interface (OMCI) for the purpose of achieving interoperability between an optical line terminal (OLT) and an optical network unit (ONU) produced by different manufacturers. This Recommendation specifies a protocol-independent management information base (MIB) management entity and simulates a process of exchanging information between the OLT and the ONU.

Manufacturers produce GPON ONU devices according to ITU-T Recommendation G.988. G.988 specifies the types of services that GPON ONUs can carry, including Internet services, Voice over Internet Protocol (VoIP) services, digital subscriber line (xDSL) services and video services. To implement these services, G.988 defines various OMCI management entities for managing ONUs. The various OMCI management entities are large in number and have a complex relationship. In the beginning, the GPON device manufacturers did not encapsulate G.988 and provided standard interfaces for users directly. This caused complex GPON service configurations, low GPON device maturity and high GPON device costs. Later, the manufacturers generally provided an ONU template solution, greatly simplifying the process of configuring GPON ONU services. The ONU template solution is abstracting various ONU management entities into various ONU templates. For example, an ONU line template includes a transmission container (T-CONT), a GPON encapsulation mode (GEM) port and other line management entities; an ONU alarm template includes alarm management entities; and other ONU templates include management entities for Internet data services, VoIP services, xDSL services, video services and other ONU services. Various ONU template data is preconfigured on an OLT network element device. Once an ONU is bound to an ONU template, ONU service configurations are completed. An advantage of the ONU template solution is that once the ONU template data is configured on the OLT network element, ONU services are rapidly deployed in batches, avoiding a large amount of repetitive configuration work.

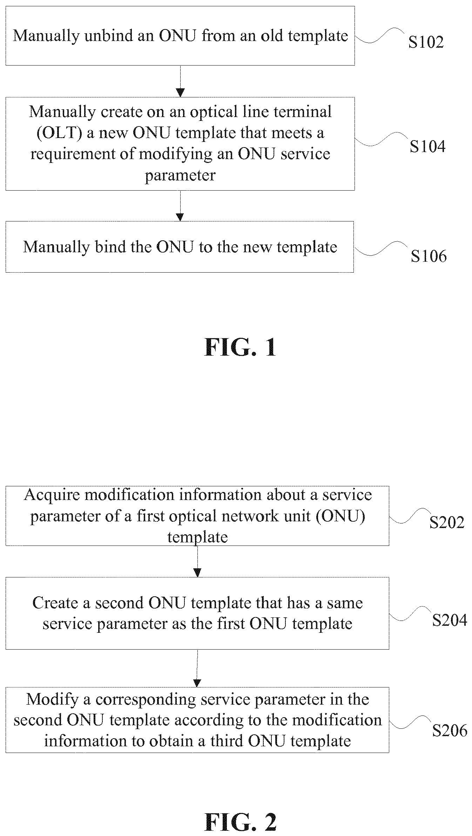

The ONU template solution is becoming a mainstream GPON ONU service configuration solution. However, inventors of the present invention find in research that the ONU template solution provided in the related art has the following problem: once the ONU template is bound to the ONU, all ONUs bound to this template have the same service parameters. When service parameters of an individual ONU need to be modified, since data in the bound ONU template cannot be modified directly, an administrator needs to reconfigure a new template and to implement a large number of service parameter configuration processes to adapt to changes of the service parameters. FIG. 1 is a flowchart of a method for generating an ONU template in the related art. As illustrated in FIG. 1, the method includes the following steps:

In step S102, an ONU is manually unbound from an old template.

In step S104, a new ONU template that meets a requirement of modifying an ONU service parameter is manually created on an OLT.

In step S106, the ONU is manually bound to the new template.

It can be seen that though the ONU service parameter is modified through the above steps, the process is rather complex. In particular, in step S104, the creation of the new ONU template involves a large number of data configuration processes.

No efficient solution has been provided to solve the problem of cumbersomeness of a process of modifying an ONU service parameter in the related art.

### SUMMARY

To solve the above problem, embodiments of the present invention provide a method and apparatus for generating an ONU template.

According to one aspect of embodiments of the present invention, a method for generating an ONU template is provided. The method includes: acquiring modification information about a service parameter of a first ONU template; creating a second ONU template that has a same service parameter as the first ONU template; and modifying a corresponding service parameter in the second ONU template according to the modification information to obtain a third ONU template.

Preferably, acquiring the modification information about the service parameter of the first ONU template includes: receiving a template identifier of the first ONU template and the modification information; and searching for the first ONU template according to the template identifier.

Preferably, acquiring the modification information about the service parameter of the first ONU template includes: receiving an ONU identifier of a first ONU bound to the first ONU template and the modification information; and searching for the first ONU template according to the ONU identifier.

Preferably, the method further includes: unbinding the first ONU bound to the first ONU template from the first ONU template; and binding the unbound first ONU to the third ONU template.

Preferably, after modifying the corresponding service parameter in the second ONU template according to the modification information to obtain the third ONU template, the method further includes: receiving an ONU identifier of a second ONU and a template identifier of the third ONU template; and binding the second ONU to the third ONU template according to the ONU identifier of the second ONU and the template identifier of the third ONU template.

According to another aspect of embodiments of the present invention, an apparatus for generating an ONU template is provided. The apparatus includes: an acquisition module, which is configured to acquire modification information about a service parameter of a first ONU template; a creation module, which is configured to create a second ONU template that has a same service parameter as the first ONU template; and a modification module, which is configured to modify a corresponding service parameter in the second ONU template according to the modification information to obtain a third ONU template.

Preferably, the acquisition module includes a first receiving unit, which is configured to receive a template identifier of the first ONU template and the modification information; and a first search unit, which is configured to search for the first ONU template according to the template identifier.

Preferably, the acquisition module further includes a second receiving unit, which is configured to receive an ONU identifier of a first ONU bound to the first ONU template and the modification information; and a second search unit, which is configured to search for the first ONU template according to the ONU identifier.

Preferably, the apparatus further includes an unbinding module, which is configured to unbind the first ONU bound to the first ONU template from the first ONU template; and a first binding module, which is configured to bind the unbound first ONU to the third ONU template.

Preferably, the apparatus further includes a receiving module, which is configured to receive an ONU identifier of a second ONU and a template identifier of the third ONU template; and a second binding module, which is configured to bind the second ONU to the third ONU template according to the ONU identifier of the second ONU and the template identifier of the third ONU template.

Through embodiments of the present invention, a method includes acquiring modification information about a service parameter of a first ONU template; creating a second ONU template that has a same service parameter as the first ONU template; and modifying a corresponding service parameter in the second ONU template according to the modification information to obtain a third ONU template. This method solves the problem of cumbersomeness of a process of modifying the ONU service parameter and reduces complexity of modifying the ONU service parameter.

### BRIEF DESCRIPTION OF DRAWINGS

The accompanying drawings described herein are used to provide a further understanding of the present invention, and form a part of the present application. The illustrative embodiments and descriptions thereof in the present invention are used to explain the present invention, and do not form improper limits to the present invention. In the accompanying drawings:
FIG. 1 is a flowchart of a method for generating an ONU template in the related art;
FIG. 2 is a flowchart of a method for generating an ONU template according to an embodiment of the present invention;
FIG. 3 is a structure diagram of an apparatus for generating an ONU template according to an embodiment of the present invention;
FIG. 4 is a first preferred structure diagram of an apparatus for generating an ONU template according to an embodiment of the present invention;
FIG. 5 is a second preferred structure diagram of an apparatus for generating an ONU template according to an embodiment of the present invention;
FIG. 6 is a third preferred structure diagram of an apparatus for generating an ONU template according to an embodiment of the present invention;
FIG. 7 is a fourth preferred structure diagram of an apparatus for generating an ONU template according to an embodiment of the present invention; and
FIG. 8 is a flowchart of a method for generating an ONU template according to a preferred embodiment of the present invention.

### DETAILED DESCRIPTION

The present invention will be described hereinafter in detail with reference to the accompanying drawings in connection with the embodiments. It is to be noted that if not in collision, the embodiments and features therein in the present application may be combined with each other.

Other features and advantages of the present invention will be elaborated hereinafter in the Description, and moreover, partially become apparent from the Description, or will be understood through implementation of the present invention. The object and other advantages of the present invention may be achieved and obtained through structures set forth in the Description, Claims and Drawings.

The solutions in embodiments of the present invention will be described clearly and completely in connection with the accompanying drawings in embodiments of the present invention from which the solutions will be apparent to those skilled in the art. The embodiments described below are part, not all, of embodiments of the present invention. Based on the embodiments described herein, other embodiments obtained by those skilled in the art on the premise that no creative work is done are within the scope of the present invention.

Embodiments of the present invention provide a method for generating an ONU template. FIG. 2 is a flowchart of a method for generating an ONU template according to an embodiment of the present invention. As illustrated in FIG. 2, the method includes the following steps:

In step S202, modification information about a service parameter of a first ONU template is acquired;

In step S204, a second ONU template that has a same service parameter as the first ONU template is created;

In step S206, a corresponding service parameter in the second ONU template is modified according to the modification information to obtain a third ONU template.

Through the above steps, the corresponding service parameter in the second ONU template that has the same service parameter as the first ONU template is modified according to the modification information about the service parameter of the first ONU template, so as to obtain a new ONU template (i.e., the third ONU template), avoiding a complex service parameter configuration process when the new ONU template is created. It can be seen that the above steps can be used to create and modify an ONU template fast and efficiently, solving the problem of cumbersomeness of a process of modifying the ONU service parameter and reducing complexity of modifying the ONU service parameter.

Preferably, the method is applicable to an OLT.

Preferably, the second ONU template generated in step S204 has the same service parameter as the first ONU template, but is uniquely identified by a different template identifier from the first ONU template. Preferably, the second ONU template is temporarily stored in a memory, and the third ONU template obtained in step S206 may be assigned a same template identifier as the second ONU template and stored in a non-volatile storage medium.

Preferably, the second ONU template generated in step S204 has the same service parameter as the first ONU template, and may not be assigned a template identifier. Preferably, the second ONU template is temporarily stored in a memory, and the third ONU template obtained in step S206 is assigned a unique identifier different from the first ONU template and stored in a non-volatile storage medium.

Preferably, one way to execute step S202 is to acquire information about an ONU template, and then find, according to the acquired template information, the ONU template to be modified. For example, a template identifier of the first ONU template and the modification information are received; and the first ONU template is searched for according to the template identifier.

Preferably, another way to execute step S202 is to acquire information about an ONU, and then find, according to the acquired information, an ONU template bound to the ONU to be modified. For example, an ONU identifier of a first ONU bound to the first ONU template and the modification information are received; and the first ONU template is searched for according to the ONU identifier.

A service parameter of an ONU is the same as a service parameter of an ONU template bound to the ONU. Multiple ONUs may be bound to the same ONU template. When the service parameter of one or more of the multiple ONUs needs to be modified, it is needed first to unbind the one or more ONUs from the currently bound ONU template and then to bind the one or more ONUs to a new modified ONU templet, thereby achieving the purpose of modifying the service parameter of the one or more ONUs. Preferably, after step S206, the method may further include unbinding the first ONU bound to the first ONU template from the first ONU template; and binding the unbound first ONU to the third ONU template.

Preferably, a new ONU template obtained through steps S202 to S206 can be bound to another ONU. For example, an ONU identifier of a second ONU and a template identifier of the third ONU template are received; and the second ONU is bound to the third ONU template according to the ONU identifier of the second ONU and the template identifier of the third ONU template.

Embodiments of the present invention further provide an apparatus for generating an ONU template to implement the above-mentioned embodiment and preferred examples. Those that have been described will not be repeated. Modules involved in the apparatus will be described below. As used below, the term "module" may be a software, a hardware or a combination thereof capable of implementing preset functions. The apparatus described in the following embodiments is preferably implemented by software, but implementation by software or by a combination of software and hardware is also possible and conceived.

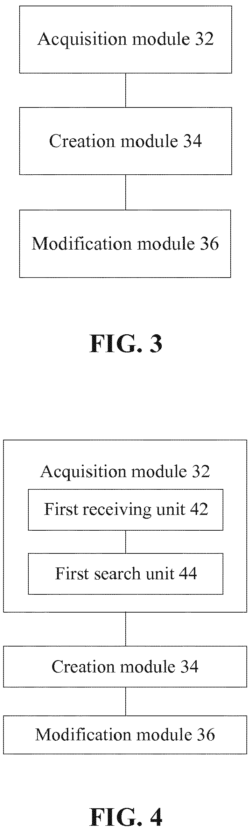

FIG. 3 is a structure diagram of an apparatus for generating an ONU template according to an embodiment of the present invention. As illustrated in FIG. 3, the apparatus includes an acquisition module 32, a creation module 34 and a modification module 36. The acquisition module 32 is configured to acquire modification information about a service parameter of a first ONU template. The creation module 34 is coupled to the acquisition module 32 and is configured to create a second ONU template that has a same service parameter as the first ONU template. The modification module 36 is coupled to the creation module 34 and is configured to modify a corresponding service parameter in the second ONU template according to the modification information to obtain a third ONU template.

FIG. 4 is a first preferred structure diagram of an apparatus for generating an ONU template according to an embodiment of the present invention. As illustrated in FIG. 4, preferably, the above acquisition module 32 includes a first receiving unit 42, which is configured to receive a template identifier of the first ONU template and the modification information; and a first search unit 44, which is coupled to the first receiving unit 42 and is configured to search for the first ONU template according to the template identifier.

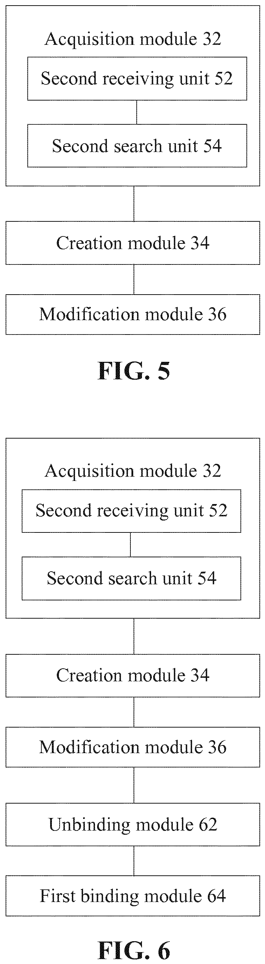

FIG. 5 is a second preferred structure diagram of an apparatus for generating an ONU template according to an embodiment of the present invention. As illustrated in FIG. 5, preferably, the above acquisition module 32 further includes a second receiving unit 52, which is configured to receive an ONU identifier of a first ONU bound to the first ONU template and the modification information; and a second search unit 54, which is coupled to the second receiving unit 52 and is configured to search for the first ONU template according to the ONU identifier.

FIG. 6 is a third preferred structure diagram of an apparatus for generating an ONU template according to an embodiment of the present invention. As illustrated in FIG. 6, preferably, the apparatus further includes an unbinding module 62, which is configured to unbind the first ONU bound to the first ONU template from the first ONU template; and a first binding module 64, which is coupled to the unbinding module 62 and is configured to bind the unbound first ONU to the third ONU template.

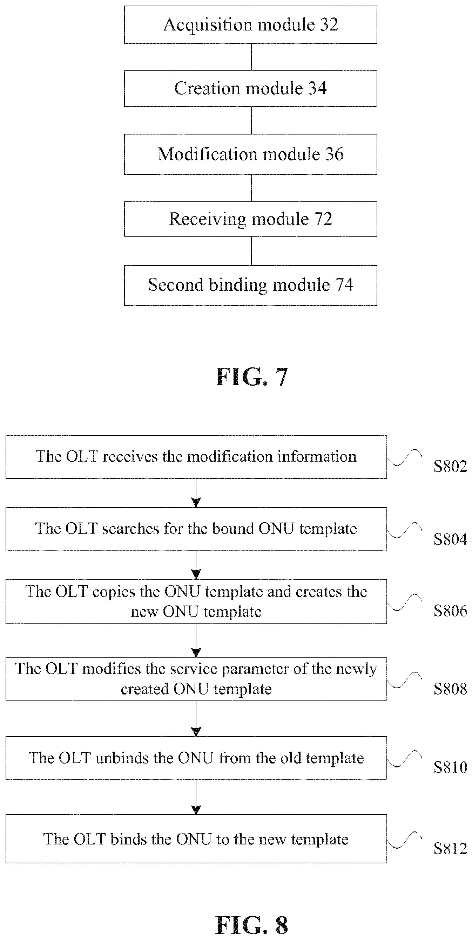

FIG. 7 is a fourth preferred structure diagram of an apparatus for generating an ONU template according to an embodiment of the present invention. As illustrated in FIG. 7, preferably, the apparatus further includes a receiving module 72, which is coupled to the modification module 36 and is configured to receive an ONU identifier of a second ONU and a template identifier of the third ONU template; and a second binding module 74, which is coupled to the receiving module 72 and is configured to bind the second ONU to the third ONU template according to the ONU identifier of the second ONU and the template identifier of the third ONU template.

Additionally, various function units in embodiments of the present invention may be integrated into one processing unit, or each unit may be physically present separately, or two or more units may be integrated into one unit. The integrated unit may be implemented by hardware or a software function unit.

To make clearer the description of embodiments of the present invention, the following description will be made with reference to a preferred embodiment.

In the preferred embodiment of the present invention, ONU-a indicates a unique identifier (equivalent to the above ONU identifier) of a PON ONU; ONU-profile-a indicates a unique identifier (equivalent to the above template identifier) of an ONU template, and has been bound to the ONU-a and other ONUs; and ONU-modify-data (equivalent to the above modification information) indicates a service parameter and new parameter value information of the ONU-a to be modified.

In the case where the ONU-a has been bound to the ONU-profile-a, if some service parameters of the ONU-a are to be modified, in theory, only parameters in the ONU-profile-a can be modified. However, many ONUs are usually bound to the ONU-profile-a. Thus, once the parameters in the ONU-profile-a are modified, other ONUs are affected. Therefore, it is infeasible to meet a requirement of modifying the service parameters of the ONU-a by modifying the ONU-profile-a. In the related art, a solution is first to unbind the ONU-a from the ONU-profile-a, and then to configure ONU data without binding an ONU template. In this way, modification of the service data of the ONU-a does not affect other ONUs.

It can be seen that it is infeasible to solve the problem by modifying the ONU-profile-a when both ONU data and ONU template data have been saved on an OLT device, the service parameters of the ONU-a need to be modified and the ONU-a has been bound to the ONU template ONU-profile-a.

To modify the service parameters of the ONU-a, the preferred embodiment of the present invention provides a method for rapidly modifying ONU template data in a PON network system. The method includes the following steps:

In step 11, an OLT receives from a transmitting end (e.g., an ONU-a user) a message indicating that a parameter of an ONU-a is to be modified. Content of the message includes, but is not limited to, the following information: ONU-a as information of ONU identifier, and ONU-modify-data as information of ONU service parameter to be modified;

In step 12, according to the ONU-a, the OLT finds an ONU template ONU-profile-a to which the ONU-a is bound;

In step 13, the OLT copies data of the ONU template ONU-profile-a to which the ONU-a is bound to a new ONU template ONU-profile-b;

In step 14, the OLT modifies a value of the template parameter in the ONU-profile-b according to the ONU-modify-data in step 11 and saves ONU-profile-b data;

In step 15, the OLT unbinds the ONU-a in step 11 from the ONU template ONU-profile-a to which the ONU is bound;

In step 16, the OLT binds the ONU-a in step 11 to the ONU-profile-b in step D.

Step 11 may further include the following step:

In step 17, the message, which is transmitted by the transmitting end and indicates that a parameter of the ONU-a is to be modified, includes, but is not limited to, the following information: a human-machine interaction (HMI) mode based on a command-line interface (CLI) and an interaction mode based on a network management system.

In the preferred embodiment of the present invention, the OLT automatically performs the various steps described in the present solution. This solution not only efficiently and rapidly solves a problem in a process where a user modifies ONU service parameters, but also rapidly and automatically creates the new template ONU-profile-b applicable to other ONUs.

The preferred embodiment of the present invention will be described in detail with reference to an accompanying drawing.

According to the preferred embodiment of the present invention, the new ONU template that is automatically created by the OLT to meet the service parameter modification requirement can be used to achieve the object of rapidly modifying ONU service parameters.

In the preferred embodiment of the present invention, the ONU is identified as ONU-a, the ONU template to which the ONU is bound is identified as ONU-profile-a, and the information of ONU service parameter to be modified is identified as ONU-modify-data.

FIG. 8 is a flowchart of a method for generating an ONU template according to a preferred embodiment of the present invention. As illustrated in FIG. 8, the method includes the following steps:

In step S802, the OLT receives the modification information.

For example, an operator submits an instruction for modifying an ONU-a service parameter to the OLT through a CLI command, a Simple Network Management Protocol (SNMP) or a northbound interface command, and the OLT receives the modification instruction successfully. The instruction information includes ONU-a as the ONU identifier information, and ONU-modify-data as the information of the ONU service parameter to be modified.

In step S804, the OLT searches for the bound ONU template.

For example, according to the ONU-a, the OLT finds the ONU template ONU-profile-a to which the ONU-a is bound, and then acquires all ONU service parameter data included in the ONU-profile-a.

In step S806, the OLT copies the ONU template and creates the new ONU template.

For example, the OLT copies all the ONU service parameter data included in the ONU-profile-a acquired in step S804, and then creates the new ONU template ONU-profile-b. In this case, the ONU-profile-a and the ONU-profile-b include exactly the same ONU service parameter values except for the template identifiers.

In step S808, the OLT modifies the service parameter of the newly created ONU template.

For example, the OLT modifies the corresponding old service data in the ONU-profile-b using the new ONU-modify-data service data of step S802. After the modification is completed, the ONU-profile-b is saved. In this case, differences exist between the ONU-profile-a and the ONU-profile-b. The data in the ONU-profile-b is an ONU template that completely meets the ONU-a modification requirement.

In step S810, the OLT unbinds the ONU from the old template (i.e., the ONU-profile-a).

For example, if the ONU-a is still bound to the ONU-profile-a, the ONU-a cannot modify the service parameter of the ONU. Therefore, the OLT unbinds the ONU-a from the ONU-profile-a.

In step S812, the OLT binds the ONU to the new template (i.e., the ONU-profile-b).

For example, the OLT is responsible for binding the ONU-a to the ONU-profile-b. The ONU-profile-b meets the service modification requirement, and thereby the OLT implements the ONU-based service parameter modification function. Meanwhile, the ONU-profile-b template can also be used by other ONUs.

The preferred embodiment of the present invention will be described below in detail in connection with a specific embodiment.

In the preferred embodiment, the ONU-a using a certain PON port has been bound to the ONU template ONU-profile-a, and the ONU-profile-a template is also bound by other ONUs; and an Ethernet port 1 of the user ONU-a carries a user broadband Internet service, the bandwidth of the Ethernet port 1 will be modified from 2 MHz to 10 MHz, and the bandwidth value of the Ethernet port 1 is configured in the ONU-profile-a.

A preferred processing procedure in connection with the preferred embodiment is as follows:

In step 21, the bandwidth value of the Ethernet port 1 is checked on a network management system. If the solution provided by embodiments of the present invention is not adopted, it is not allowed to directly modify the bandwidth value of the Ethernet port 1 of the ONU-a. When the solution provided by embodiments of the present invention is adopted, the user can directly modify the bandwidth value from 2 MHz to 10 MHz on an interface. After the modification is completed, the user clicks the "OK" icon on the interface so that the network management system transmits the modification information to an OLT device processing system. Subsequent processing flows are executed by the OLT automatically. If the execution is successful, the network management system interface indicates that the modification is successful.

The following steps are an internal logical processing procedure of the OLT device:

In step 22, the OLT finds the ONU template ONU-profile-a to which the ONU-a is bound according to the received modification information, and then acquires all the ONU service parameter data included in the ONU-profile-a, including the original 2 MHz bandwidth value of the Ethernet port to be modified in the present example.

In step 23, the OLT copies all the acquired ONU service parameter data included in the ONU-profile-a, and then creates the new ONU template ONU-profile-b. In this case, the ONU-profile-a and the ONU-profile-b include exactly the same ONU service parameter values except for the template identifiers, and the bandwidth value of the Ethernet port 1 is still 2 MHz.

In step 24, the OLT modifies the bandwidth value of the Ethernet port 1 in the ONU-profile-b from 2 MHz to 10 MHz. After the modification is completed, the ONU-profile-b is saved. In this case, the ONU service data included in the ONU-profile-a and the ONU service data included in the ONU-profile-b differ only in the bandwidth value of the Ethernet port 1.

In step 25, the OLT unbinds the ONU-a from the ONU-profile-a template and then binds the ONU-a to the ONU-profile-b template. In this way, the modification of the bandwidth value of the Ethernet port 1 is completed, and the successful processing is notified to the network management system.

The preferred embodiment is applicable not only to GPON systems but also to all PON systems including Ethernet PONs (EPONs).

In summary, through the above-mentioned embodiments and preferred embodiment or preferred implementation of the present invention, PON ONU service data can be modified rapidly based on an ONU template and a new ONU template can be generated efficiently and conveniently.

Another preferred embodiment provides a software for implementing the solutions described in the above-mentioned embodiments and preferred implementations.

Another embodiment provides a storage medium configured to store the above-mentioned software, including but not limited to an optical disk, a floppy disk, a hard disk and a rewritable memory.

It is to be noted that the terms "first", "second" and the like in the Description, Claims and Drawings of the present invention are used to distinguish similar objects and are not necessarily used to describe a particular order or sequence. It is to be understood that the objects used in this way are interchangeable where appropriate so that embodiments of the present invention described herein may also be implemented in a sequence not illustrated or described herein. In addition, the terms "comprising", "including" or any other variations thereof described herein are intended to encompass a non-exclusive inclusion. For example, a process, method, system, product or device that includes a series of steps or elements not only includes the expressly listed steps or elements but may also include other steps or elements that are not expressly listed or are inherent to such process, method, system, product or device.

Apparently, those skilled in the art should know that each above-mentioned module or step of the present invention may be implemented by a universal computing device, they may be concentrated on a single computing device or distributed on a network formed by a plurality of computing devices, and alternatively, they may be implemented by program codes executable by the computing devices, so that they may be stored in a storage device for execution by the computing devices, and in some circumstances, the illustrated or described steps may be executed in sequences different from those described here, or they may be made into various integrated circuit modules separately, or multiple modules or steps therein may be made into a single integrated circuit module for implementation. Therefore, the present invention is not limited to any specific combination of hardware and software.

The above is only a preferred embodiment of the present invention and is not intended to limit the present invention, and for those skilled in the art, the present invention may have various modifications and variations. Any modifications, equivalent substitutions, improvements and the like made within the spirit and principle of the present invention are within the scope of the present invention.

### INDUSTRIAL APPLICABILITY

The above-mentioned embodiments of the present invention, which are applicable to the field of communications, solve the problem of cumbersomeness of a process of modifying an ONU service parameter and reduce complexity of modifying the ONU service parameter.

## Claims

1. A method for generating an optical network unit (ONU) template, comprising:
acquiring modification information about a service parameter of a first ONU template;
creating a second ONU template that has a same service parameter as the first ONU template; and
modifying a corresponding service parameter in the second ONU template according to the modification information to obtain a third ONU template.

2. The method of claim 1, wherein acquiring the modification information about the service parameter of the first ONU template comprises:
receiving a template identifier of the first ONU template and the modification information; and
searching for the first ONU template according to the template identifier.

3. The method of claim 1, wherein acquiring the modification information about the service parameter of the first ONU template comprises:
receiving an ONU identifier of a first ONU bound to the first ONU template and the modification information; and
searching for the first ONU template according to the ONU identifier.

4. The method of claim 3, further comprising:
unbinding the first ONU bound to the first ONU template from the first ONU template; and
binding the unbound first ONU to the third ONU template.

5. The method of any one of claims 1 to 4, wherein after modifying the corresponding service parameter in the second ONU template according to the modification information to obtain the third ONU template, the method further comprises:
receiving an ONU identifier of a second ONU and a template identifier of the third ONU template; and
binding the second ONU to the third ONU template according to the ONU identifier of the second ONU and the template identifier of the third ONU template.

6. An apparatus for generating an optical network unit (ONU) template, comprising:
an acquisition module, which is configured to acquire modification information about a service parameter of a first ONU template;
a creation module, which is configured to create a second ONU template that has a same service parameter as the first ONU template; and
a modification module, which is configured to modify a corresponding service parameter in the second ONU template according to the modification information to obtain a third ONU template.

7. The apparatus of claim 6, wherein the acquisition module comprises:
a first receiving unit, which is configured to receive a template identifier of the first ONU template and the modification information; and
a first search unit, which is configured to search for the first ONU template according to the template identifier.

8. The apparatus of claim 6, wherein the acquisition module further comprises:
a second receiving unit, which is configured to receive an ONU identifier of a first ONU bound to the first ONU template and the modification information; and
a second search unit, which is configured to search for the first ONU template according to the ONU identifier.

9. The apparatus of claim 8, further comprising:
an unbinding module, which is configured to unbind the first ONU bound to the first ONU template from the first ONU template; and
a first binding module, which is configured to bind the unbound first ONU to the third ONU template.

10. The apparatus of any one of claims 6 to 9, further comprising:
a receiving module, which is configured to receive an ONU identifier of a second ONU and a template identifier of the third ONU template; and
a second binding module, which is configured to bind the second ONU to the third ONU template according to the ONU identifier of the second ONU and the template identifier of the third ONU template.
